(19) Europäisches Patentamt
European Patent Office
Office européen des brevets

(11) Numéro de publication: **0 323 312 B1**

(12) **FASCICULE DE BREVET EUROPEEN**

(45) Date de publication de fascicule du brevet: **21.10.92**

(51) Int. Cl.[5]: **C08G 12/38**

(21) Numéro de dépôt: **88403238.4**

(22) Date de dépôt: **19.12.88**

# (54) Procédé de durcissement de résines aminoplastes.

(30) Priorité: **23.12.87 FR 87180003**

(43) Date de publication de la demande:
**05.07.89 Bulletin 89/27**

(45) Mention de la délivrance du brevet:
**21.10.92 Bulletin 92/43**

(84) Etats contractants désignés:
**AT BE CH DE ES FR GB GR IT LI LU NL SE**

(56) Documents cités:
**EP-A- 0 062 389**
**GB-A- 2 084 597**
**GB-A- 2 099 007**

(73) Titulaire: **ELF ATOCHEM S.A.**
**4 & 8, Cours Michelet La Défense 10**
**F-92800 Puteaux(FR)**

(72) Inventeur: **Garrigue, Roger**
**23, rue du Capitaine Escudié**
**F-31000 Toulouse(FR)**
Inventeur: **Lalo, Jack**
**116, avenue Saint-Exupéry**
**F-31400 Toulouse(FR)**

(74) Mandataire: **Rieux, Michel et al**
**ATOCHEM Département Propriété Industriel-le 4, Cours Michelet - La Défense 10 - Cedex 42**
**F-92091 Paris-La Défense(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services

## Description

La présente invention concerne un nouveau procédé de durcissement de résines aminoplastes, elle a plus particulièrement pour objet un nouveau procédé de durcissement de résines aminoplastes mettant en oeuvre un système catalytique permettant d'influer sur la réactivité des résines aminoplastes.

Les résines aminoplastes sont des produits connus qui sont utilisées largement dans l'industrie du bois pour la fabrication en particulier de panneaux particules. Les résines aminoplastes le plus couramment utilisées sont les résines urée-formol. Elles sont fabriquées de façon connue par condensation d'urée et de formol à pH compris entre 4 et 7 et à une température voisine de l'ébullition : de préférence cette réaction de condensation est réalisée en plusieurs étapes.

Le principal inconvénient des résines urée-formol est de provoquer des émanations élevés de formol libre. On a essayé de réduire le taux de formol libre en mettant en oeuvre divers procédés de fabrication : malheureusement lorsqu'on veut atteindre des taux de formol particulièrement bas, l'expérience montre que cet objectif s'accompagne à la fois d'une diminution de la réactivité et de la stabilité des résines ainsi que d'une dégradation des propriétés mécaniques des panneaux finis. On a aussi proposé pour supprimer le formol libre, d'utiliser des résines dépourvues de formol en particulier des résines à base de solutions d'isocyanate. Malheureusement le problème du formol est remplacé par celui des isocyanates dont l'action sur l'homme est plus néfaste et plus durable que ne l'est le formol puisqu'on a mis en évidence la présence de groupes isocyanates libres dans les panneaux particules même après plusieurs années de fabrication.

On a aussi proposé de rajouter de la mélamine lors de la fabrication des résines urée-formol. Malheureusement la mise en oeuvre de la mélamine avec des résines urée-formol classiques ne commencent à faire effet qu'à partir de taux pouvant atteindre 20 % et plus, ce qui rend son emploi commercialement rédhibitoire étant donné son prix de revient. On a ainsi proposé d'abaisser le taux de mélamine à des valeurs inférieures à 10 %. On observe alors une diminution de la réactivité de ces résines qui est particulièrement préjudiciable pour le maintien de cadences de fabrication commercialement acceptables.

Le besoin se fait donc sentir de disposer de résines urée-formol contenant de la mélamine mais qui présente à la fois de bonne réactivité, de bonne stabilité et des taux de formol réduits et dont l'utilisation conduit à des panneaux particules finis présentant de bonnes caractéristiques mécaniques.

La présente invention concerne un nouveau procédé de durcissement de résines aminoplastes constituées de résines urée-formol contenant moins de 10 % de mélamine et présentant un rapport molaire

$$\frac{F}{NH_2}$$

inférieur à 0,5 durcies à l'aide d'un catalyseur constitué d'un sel d'ammonium caractérisé en ce que le durcissement des résines aminoplastes est réalisé à l'aide d'un catalyseur constitué d'un dérivé de la triazinone de formule :

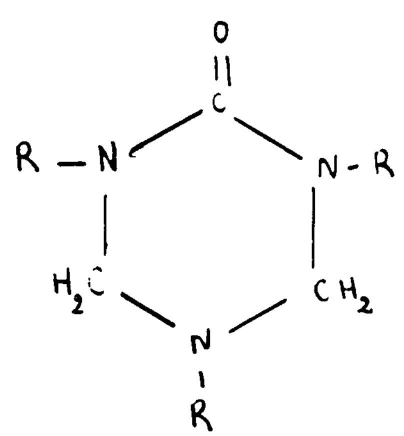

dans laquelle R est H et/ou $CH_2$ OH, ce catalyseur étant utilisé à raison de 0,01 à 0,2 moles pour 100 grammes de résine sèche.

Selon une caractéristique importante du procédé de l'invention, le catalyseur mis en oeuvre constitué

d'un dérivé de la triazinone peut-être obtenu selon divers méthodes, par exemple :

- réaction d'urée et de formol ou d'un précondensat urée-formol sur un sel d'ammonium, ces réactifs étant utilisés dans des rapports molaires suivants :

$$\frac{\text{Formol}}{\text{urée}} \text{ au moins égal à } 5$$

$$\text{et} \quad \frac{\text{Formol}}{(NH_4)^+} \text{ au moins égal à } 1.$$

  le sel étant choisi parmi un chlorure, un acétate, un lactate, un formiate ou un phosphate,
- soit par réaction d'hexamethylène tetramine sur de l'urée et du formol en présence d'un acide, les réactifs étant utilisés de préférence en quantités stoechiométriques,
- soit par réaction de l'ammoniac sur l'urée et le formol en présence d'un acide, de préférence les réactifs étant utilisés en quantité stoechiométrique, la quantité d'acide présente étant de préférence d'une mole par mole d'ammoniac.

Selon l'invention lorsque le catalyseur utilisé est fabriqué à partir d'hexaméthylène tetramine ou à partir d'ammoniac en présence d'un acide, cet acide est choisi parmi l'acide chlorhydrique, acétique, lactique, formique ou phosphorique.

On a trouvé qu'en opérant dans ces conditions on obtient des mélanges collants à base de résine urée-formol contenant de la mélamine particulièrement réactives et que ces résines permettent de fabriquer des panneaux particules présentant des taux d'émanation en formol libre réduits alliés à de bonnes caractéristiques mécaniques. Par ailleurs la mise en oeuvre de telles compositions catalytiques permet ainsi d'ajuster le rapport molaire

$$\frac{F}{NH_2}$$

des résines aminoplastes mises en oeuvre quelque soit le taux de mélamine.

Le procédé de la présente demande consiste à réaliser le durcissement de résines urée-formol de rapport molaire

$$\frac{F}{NH_2} < 0,5$$

les groupements $NH_2$ étant a le somme totale des groupements $NH_2$ d'urée et de mélamine mis en oeuvre et contenant moins de 10 % de mélamine à l'aide d'un catalyseur avant la formule :

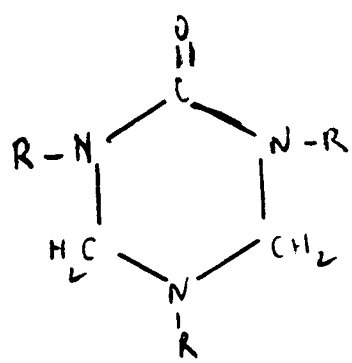

dans laquelle R est H et ou $CH_2$ OH, ce catalyseur étant utilisé à raison de 0,01 à 2 moles pour 100

grammes de résine sèche.

Selon l'invention le catalyseur mis en oeuvre peut être obtenu selon divers procédés :

- soit par réaction d'urée et de formol ou d'un précondensat urée-formol sur un sel d'ammonium, ces réactifs étant utilisés dans des rapports molaires

$$\frac{\text{Formol}}{\text{urée}} \text{ au moins égal à 5,}$$

$$\text{et} \quad \frac{\text{Formol}}{(NH_4)^-} \text{ au moins égal à 1}$$

  le sel d'ammonium utilisé est choisi parmi le chlorure, l'acétate, le lactate, le formiate ou le phosphate d'ammonium.
- soit par réaction d'hexaméthylène tétramine sur de l'urée et du formol en présence d'un acide choisi parmi l'acide chlorhydrique, acétique, lactique, formique ou phophorique : la réaction s'effectuant selon le schéma suivant :
  Hexaméthylène - tetramine + acide + formol + urée → dérivé triazinone
- soit par réaction de l'ammoniac, sur l'urée et le formol en présence d'un acide de préférence les réactifs utilisés en quantité stoeichrométrique, la quantité d'acide présente étant de préférence d'une mol par mole d'ammoniac.

Les résines urée-formol présentant un rapport molaire

$$\frac{F}{NH_2} < 0{,}5$$

contenant moins de 10 % de mélamine utilisées pour le mise en oeuvre du procédé de l'invention sont des résines connues. Elles sont par exemple décrites dans la demande déposée par la demanderesse, intitulée "Nouveau procédé de fabrication de résines aminoplastes à très faible dégagement de formol". Elles sont fabriquées en particulier selon un procédé en trois étapes qui consiste à :

- dans une première étape à condenser de l'urée et du formol en solution en quantité telle que le rapport

$$\frac{F}{NH_2}$$

  à cette étape soit compris entre 0,9 et 1,05, dans une seconde étape à rajouter de l'urée et de la mélamine de façon que le rapport

$$\frac{F}{NH_2}$$

  à cette étape soit compris entre 0,5 et 0,9.
- dans une troisième étape à additionner de l'urée de manière que le rapport molaire

$$\frac{F}{NH_2}$$

  de la résine soit compris entre 0,3 et 0,5, du borax étant éventuellement ajouté en fin de condensation.

Les exemples suivants illustrent la présente invention. Les quantités sont exprimés en parties en poids.

Exemple 1

Dans un réacteur muni d'un réfrigérant, d'un agitateur et d'un dispositif de chauffage on introduit :

- 1689 parties d'un précondensat urée-formol contenant 56,4 % de formol et 23,6 % d'urée,
- 582 parties d'urée,
- 529 parties d'eau.

La rapport molaire

$$\frac{F}{NH_2}$$

à cette étape est de 1,05.

On ajoute ensuite après cette étape de condensation acide

- 464 parties d'urée
- 240 parties de mélamine

Le rapport molaire

$$\frac{F}{NH_2}$$

à cette étape est de 0,62.

Dans la troisième étape on rajoute 4 parties de borax, 496 parties d'urée. La résine finale obtenue présente les caractéristiques suivantes :

$$- \frac{F}{NH_2} = 0,47$$

| | |
|---|---|
| - Viscosité à 20 ° C | 0,74 Pa.s |
| - Extrait sec | 65,3 % |
| - pH | 8,34 |
| - Temps de gel à 100 ° C | 13 minutes |

On prépare des solutions catalytiques à partir de formurée qui présente la composition suivant :

| | |
|---|---|
| urée | 20,13 % en poids |
| formol | 49,02 % |

On rajoute différents sels d'ammonium. Le tableau suivant indique les quantités de réactifs mis en oeuvre.

| Sels d'ammonium | masse de sels ou d'acide (g) | masse d'eau (g) | masse de formurée (g) |
|---|---|---|---|
| formiate d'$NH_4^+$ | 42,3 | 125 | 200 |
| acetate d'$NH_4^+$ | 51,72 | 147,2 | 200 |
| lactate d'$NH_4^+$ | 71,87 | 195,8 | 200 |
| phosphate d'$NH_4^+$ | 77,16 | 77,16 | 200 |

Chaque solution catalytique a été préparée par chauffage du sel d'ammonium dans le formurée à 70 ° C, pendant une heure.

Exemple 2

Les différentes solutions catalytiques sont utilisées pour le durcissement de la résine décrite dans l'exemple 1 (6 % de mélamine) et une autre résine du même type qui ne contient que 3 % de mélamine. Dans chaque essai on utilise 0,04 mole de catalyseur pour 100 grammes de résine sèche.

Le tableau suivant indique les temps de gel à 80 ° C (minutes). Il indique également à titre de comparaison le temps de gel des mêmes résines durcies de façon connue avec du chlorure d'ammonium.

TABLEAU

| (minutes, secondes) | | |
|---|---|---|
| Sels d'ammonium | résine à 3 % de mélamine | résine à 6 % de mélamine |
| formiate d'$NH_4^+$ | 5′ | 9′ |
| acetate d'$NH_4^+$ | 11′ | 16′ |
| lactate d'$NH_4^+$ | 3′45″ | 6′15″ |
| phosphate d'$NH_4^+$ | 2′30″ | 4′ |
| chlorure d'$NH_4^+$ | 2′15″ | 6′30″ |
| Temoin (F/$NH_2$ 0,477, $NH_4Cl$) | 13′ | 19′ |

Exemple 3

La résine préparée dans l'exemple 1 est durcie avec les systèmes catalytiques décrits dans l'exemple 1 en vue de préparer des panneaux particules.

Le tableau indique les caractéristiques des panneaux obtenues ainsi que les caractéristiques de panneaux fabriqués à partir d'une résine connue ayant un rapport

$$\frac{F}{NH_2} = 0.535,$$

contenant 6 % de mélamine et durcie de façon connue à l'aide d'une solution de chlorure d'ammonium.

Les caractéristiques des panneaux ont été déterminées selon les normes suivantes :

| | |
|---|---|
| - Teneur en formol (perforateur)<br>- Epaisseur, masse volumique<br>- Traction V 20<br>- Gonflement % | en 120<br>Norme NFB 51 222<br>Norme NFB 51 250<br>Norme NBB 51 252 |

| | résine 6 % de mélamine, $F/NH_2$ = 0,47 | | | | résine 6 % mélamine $F/NH_2$ = 0,535 |
|---|---|---|---|---|---|
| | catalyseur triazinone acétate | catalyseur triazinone formiate | catalyseur triazinone lactate | catalyseur triazinone phosphate | catalyseur $NH_4$cl |
| épaisseur panneau ( mm ) | 16,15 | 16,05 | 16 | 16 | 16 |
| Gonflement 24 heures eau froide | 15,8 | 13,4 | 14,2 | 12,3 | 13,7 |
| Traction perpendiculaire ($N/mm^2$) pour masse volumique ($kg/m^3$) | 0,59<br>655 | 0,64<br>674 | 0,67<br>680 | 0,70<br>677 | 0,70<br>690 |
| Flexion $N/mm^2$ pour masse volumique $kg/m^3$ | 11,5<br>640 | 11<br>640 | 11<br>640 | 12,1<br>640 | 12<br>640 |
| Formol perforateur mg/100g | 9,5 | 6,6 | 6,7 | 5,6 | 6,4 |

## Revendications

**1.** Nouveau procédé de durcissement de résines aminoplastes constituées de résines urée-formol contenant moins de 10 % de mélamine et présentant un rapport molaire

$$\left(\frac{F}{NH_2}\right)$$

inférieur à 0,5 durcies à l'aide d'un catalyseur constitué d'un sel d'ammonium caractérisé en ce que le durcissement est réalisé à l'aide d'un catalyseur constitué d'un dérivé de la triazinone de formule :

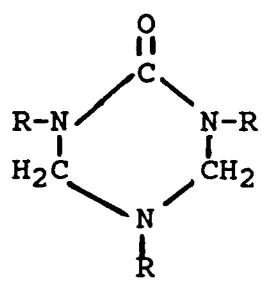

dans laquelle R est H et/ou $CH_2OH$, ce catalyseur étant utilisé à raison de 0,01 à 0,2 moles pour 100 grammes de résine sèche.

**2.** Procédé selon la revendication 1 caractérisé en que le catalyseur est obtenu par réaction d'urée et de formol ou d'un précondensat urée-formol sur un sel d'ammonium, ces réactifs étant utilisés dans des rapports molaires suivants :

$$\left(\frac{\text{Formol}}{\text{urée}}\right) \text{ au moins égal à 5}$$

$$\text{et} \quad \left(\frac{\text{Formol}}{NH_4}\right) \text{ au moins égal à 1,}$$

le sel étant choisi parmi un chlorure, un acétate, un lactate, un formiate ou un phosphate, le catalyseur

étant ensuite mis en contact avec la résine.

**3.** Procédé selon la revendication 1, caractérisé en ce que le catalyseur est obtenu par réaction d'hexaméthylène tetramine sur de l'urée et du formol en présence d'un acide les réactifs étant utilisés de préférence en quantité stoechiométrique, le catalyseur étant ensuite mis en contact avec la résine.

**4.** Procédé selon la revendication 1 caractérisé en ce que le catalyseur est obtenu par réaction de l'ammoniac sur l'urée et le formol en présence d'un acide, de préférence les réactifs étant utilisés en quantité stoechiométrique, la quantité d'acide présente étant de préférence d'une mole par mole d'ammoniac, le catalyseur étant ensuite mis en contact avec la résine.

**5.** Procédé selon les revendications 3 et 4 caractérisé en ce que le catalyseur est obtenu en présence d'un acide choisi parmi l'acide chlorhydrique, acétique, lactique, formique ou phosphorique.

## Claims

**1.** New process for curing aminoplastic resins consisting of urea-formaldehyde resins containing less than 10 % of melamine and having an ($F/NH_2$) molar ratio of less than 0.5, cured with the aid of a catalyst consisting of an ammonium salt, characterised in that the curing is carried out with the aid of a catalyst consisting of a triazinone derivative of formula:

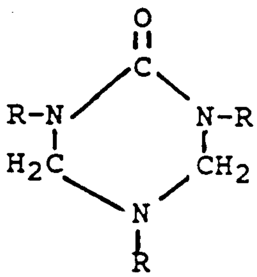

in which R is H and/or $CH_2OH$, this catalyst being employed in a proportion of 0.01 to 0.2 moles per 100 grams of dry resin.

**2.** Process according to Claim 1, characterised in that the catalyst is obtained by reaction of urea and of formaldehyde or of a urea-formaldehyde precondensate with an ammonium salt, these reactants being employed in the following molar ratios:

(Formaldehyde/urea) equal to at least 5 and $(Formaldehyde/NH_4)^-$ equal to at least 1,

the salt being chosen from a chloride, an acetate, a lactate, a formate or a phosphate, the catalyst being next brought into contact with the resin.

**3.** Process according to Claim 1, characterised in that the catalyst is obtained by reaction of hexamethylenetertramine (sic) with urea and with formaldehyde in the presence of an acid, the reactants being preferably employed in stoichiometric quantity, the catalyst being next brought into contact with the resin.

**4.** Process according to Claim 1, characterised in that the catalyst is obtained by reaction of ammonia with urea and formaldehyde in the presence of an acid, the reactants being preferably employed in stoichiometric quantity, the quantity of acid present being preferably one mole per mole of ammonia, the catalyst being next brought into contact with the resin.

**5.** Process according to Claims 3 and 4, characterised in that the catalyst is obtained in the presence of an acid chosen from hydrochloric, acetic, lactic, formic or phosphoric acid.

## Patentansprüche

**1.** Neues Verfahren zum Härten von Aminoplastharzen, die von Harnstoff-Formolharzen gebildet sind, welche weniger als 10% Melamin enthalten, ein Molverhältnis ($F/NH_2$) von weniger als 0,5 aufweisen

und mit Hilfe eines von einem Ammoniumsalz gebildeten Katalysators ausgehärtet werden, dadurch gekennzeichnet, daß das Aushärten mit Hilfe eines Katalysators erfolgt, der von einer Triazinonverbindung der Formel:

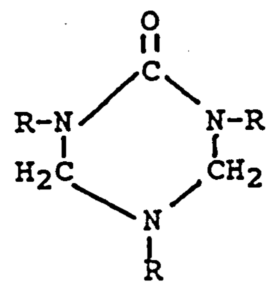

gebildet ist, in welcher R = H und/oder $CH_2OH$, wobei dieser Katalysator in einer Menge von 0,01 bis 0,2 Mol pro 100 g trockenes Harz eingesetzt wird.

**2.** Verfahren nach Anspruch 1, dadurch gekennzeichnet, daß der Katalysator durch Reaktion von Harnstoff und Formol oder eines Harnstoff-Formol-Vorkondensatsmit einem Ammoniumsalz erhalten wird, wobei diese Reaktionskomponenten in folgenden Molverhältnissen eingesetzt werden:

$$\frac{\text{Formol}}{\text{Harnstoff}} = \text{mindestens 5 und} \qquad \frac{\text{Formol}}{NH_4} = \text{mindestens 1,}$$

und wobei als Salz ausgewählt wird ein Chlorid, ein Acetat, ein Lactat, ein Formiat oder ein Phosphat, und daß der Katalysator dann mit dem Harz in Kontakt gebracht wird.

**3.** Verfahren nach Anspruch 1, dadurch gekennzeichnet, daß der Katalysator durch Reaktion von Hexamethylentetramin mit Harnstoff und Formol in Gegenwart einer Säure erhalten wird, wobei die Reaktionskomponenten vorzugsweise in stöchiometrischer Menge eingesetzt werden, und dann der Katalysator mit dem Harz in Kontakt gebracht wird.

**4.** Verfahren nach Anspruch 1, dadurch gekennzeichnet, daß der Katalysator durch Reaktion von Ammoniak mit dem Harnstoff und dem Formol in Gegenwart einer Säure erhalten wird, wobei vorzugsweise die Reaktionskomponenten in stöchiometrischer Menge eingesetzt werden, die vorhandene Säuremenge vorzugsweise ein Mol pro Mol Ammoniak beträgt und der Katalysator dann mit dem Harz in Kontakt gebracht wird.

**5.** Verfahren nach den Ansprüchen 3 und 4, dadurch gekennzeichnet, daß der Katalysator in Gegenwart einer Säure erhalten wird, die ausgewählt wird aus der Gruppe bestehend aus Salzsäure, Esslgsäure, Milchsäure, Ameisensäure und Phosphorsäure.